# EUROPÄISCHE PATENTANMELDUNG

(11) **EP 3 273 078 A1**
(43) Veröffentlichungstag der Anmeldung: **24.01.2018**
(21) Anmeldenummer: 16180128.7
(22) Anmeldetag: 19.07.2016
(51) Int. Cl.: F16C 32/04, F16C 37/00, F28D 15/00

(54) **AKTIVES MAGNETLAGER UND VERFAHREN ZUR KÜHLUNG EINES AKTIVEN MAGNETLAGERS**

(71) Anmelder: Siemens Aktiengesellschaft, 80333 München (DE)
(72) Erfinder: Tzianetopoulou, Theodora, 10707 Berlin (DE); Köhler, Bert-Uwe, 14612 Falkensee (DE); Lang, Matthias, 13158 Berlin (DE)

(57) **Zusammenfassung**

Aktives Magnetlager (1) einer um eine Achse rotierbaren Welle (4) mit,
- einem stationär angeordnet magnetisch leitfähigen Grundkörper (2), der die Welle (4) umfasst,
- axial hintereinander angeordneten Teilkörpern (9), die den magnetisch leitfähigen Grundkörper (2) bilden,
- einem in Nuten des magnetisch leitfähigen Grundkörpers (2) angeordneten Wicklungssystem,
- axialem Abstand (w) zwischen den benachbarten Teilkörpern (9).

## Beschreibung

Die Erfindung betrifft ein aktives Magnetlager und ein Verfahren zur Kühlung eines aktiven Magnetlagers.

Aktive Magnetlager werden bei vergleichsweise hohen Drehzahlen von Turbomaschinen und im Werkzeugmaschinenbau eingesetzt oder in der Reinraumtechnik, da bei Magnetlagern kein kontaminierender Abrieb entsteht.

Bei aktiven Magnetlagern wird durch einen Elektromagneten eine entsprechende Magnetkraft erzeugt. Der Strom der dafür benötigt wird, ist dabei ständig über einen Regelkreis anzupassen. Um ein aktives Magnetlager, respektive die Komponenten zu kühlen, ist beispielsweise aus der DE 203 18 389 U1 eine magnetische Lagerung bekannt, bei dem über einen Hochtemperatur-Supraleiter ein Magnetfeld erzeugt wird. Die dafür notwendige Kühlung weist einen flüssigen Stickstoff auf, um die Supraleitung aufrechtzuhalten.

Des Weiteren ist aus der DE 10 2005 032 674 A1 ein aktives Magnetlager bekannt, bei dem durch Ausbildung von Kühlkörpern am Lagergehäuse eine Abfuhr von Verlustwärme eines Verstärkers abgezogen werden soll.

Ausgehend davon liegt der Erfindung die Aufgabe zugrunde, ein aktives Magnetlager zu schaffen, das eine ausreichende leistungsfähige Lagerung in verschiedenen Temperaturbereichen bereitstellt.

Die Lösung der gestellten Aufgabe gelingt durch ein aktives Magnetlager einer um eine Achse rotierbaren Welle mit,
- einem stationär angeordnet magnetisch leitfähigen Grundkörper, der die Welle umfasst,
- axial hintereinander angeordneten Teilkörpern, die den magnetisch leitfähigen Grundkörper bilden,
- einem in Nuten des magnetisch leitfähigen Grundkörpers angeordneten Wicklungssystem,
- axialem Abstand zwischen den benachbarten Teilkörpern.

Die Lösung der gestellten Aufgabe gelingt ebenfalls durch ein Verfahren zur Kühlung eines aktiven Magnetlagers einer um eine Achse rotierbaren Welle mit,
- einem stationär angeordnet magnetisch leitfähigen Grundkörper, der die Welle umfasst,
- axial hintereinander angeordnete Teilkörpern, die den magnetisch leitfähigen Grundkörper bilden,
- einem in Nuten des magnetisch leitfähigen Grundkörpers angeordneten Wicklungssystem,
- Abstandshaltern zwischen den benachbarten Teilkörpern, wobei durch eine im Wesentlichen axial auf den magnetisch leitfähigen Grundkörper zuströmende Kühlluft, die über axial verlaufende Kühlkanäle im magnetisch leitfähigen Grundkörper oder in den Zwischenräumen zwischen den Wicklungen befindlichen Spalten axial strömt, um am axial nächsten Abstandshalter, der sich zwischen zwei axial voneinander beabstandeten Teilkörpern befindet, zumindest zum Teil radial auszuströmen.

Durch die axiale Aufteilung des magnetisch leitfähigen Grundkörpers eines aktiven Magnetlagers in axial voneinander beabstandete Teilkörper, die vorzugsweise jeweils eine axial geschichtete Blechung aufweisen, wird nunmehr einem oder mehreren voneinander unabhängigen Kühlluftströmen erlaubt, sich durch spezielle axiale Kühlkanäle im magnetisch leitfähigen Grundkörper und/oder in den axial verlaufenden Nuten, zumindest teilweise radial auszutreten und somit den magnetisch leitfähigen Grundkörper und damit auch das Wicklungssystem des Magnetlagers zu kühlen.

Die benachbarten Teilkörper werden mittels Abstandshaltern voneinander beabstandet. Einzelne, im Wesentlichen radial angeordnete Stege zwischen benachbarten Teilkörpern generieren so radiale Kühlluftkanäle zwischen den Teilkörper.

Alternativ zu den Stegen können die Abstandshalter zwischen den benachbarten Teilkörpern auch als Scheibe ausgebildet sein, die einstückig ausgeführt ist und ebenfalls radiale und/oder axiale Kühlkanäle aufweist. Vorzugsweise sind diese Scheiben aus magnetisch nicht leitfähigem Material wie z.B. Kunststoff.

Die Erfindung sowie weitere vorteilhafte Ausgestaltungen der Erfindung werden anhand schematisch dargestellter Ausführungsbeispiele näher erläutert. Dabei zeigen:
- FIG 1: die prinzipielle Anordnung eines aktiven Magnetlagers,
- FIG 2: einen magnetischen Grundkörper,
- FIG 3: eine alternative Ausführung des magnetischen Grundkörpers,
- FIG 4: eine weitere alternative Ausführung des magnetischen Grundkörpers,
- FIG 5: eine teilperspektivische Darstellung eines magnetischen Grundkörpers,
- FIG 6: einen Querschnitt eines Grundkörpers mit Stegen,
- FIG 7: einen magnetischen Grundkörper mit ungleichmäßig voneinander beabstandeten Teilkörpern,
- FIG 8: einen magnetischen Grundkörper mit gleichmäßig voneinander beabstandeten Teilkörpern.

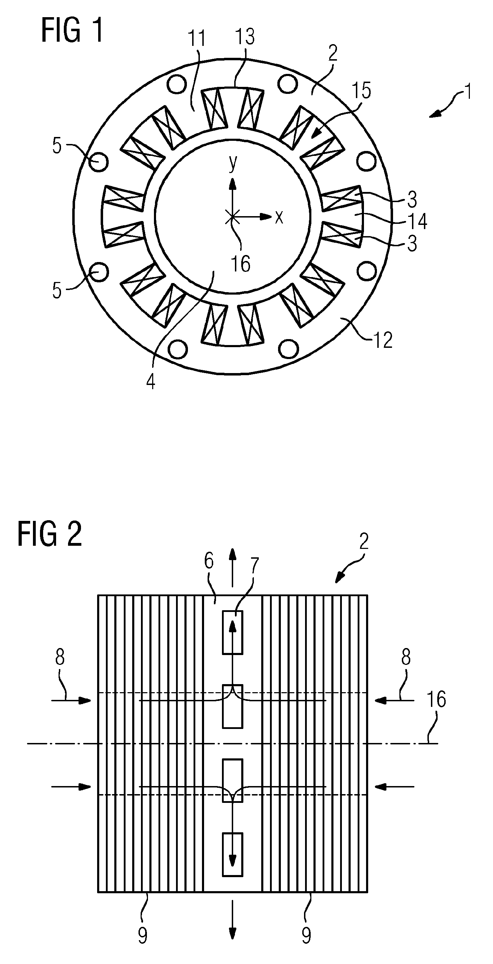

FIG 1 zeigt einen Rotor eines aktiven Magnetlagers 1, der durch die Lagerkraft im Zentrum einer Bohrung eines magnetischen Grundkörpers 2 gehalten und durch dementsprechende nicht näher dargestellte Regelverfahren und Regelvorrichtungen innerhalb dieser Bohrung des magnetisch leitfähigen Grundkörpers 2 positioniert wird. Ebenso ist ein nicht näher dargestelltes Fanglager vorgesehen, das bei Ausfall der Regelung u.a. die Lagerfunktion kurzzeitig übernimmt.

Der Rotor ist Teil einer Welle 4 oder mit einer Welle 4 eines Antriebs mechanisch drehfest verbunden. Derartige Antriebe werden beispielsweise bei Turbomaschinen, Hochfrequenzfrässpindeln, Pumpen, Ultrazentrifugen etc. eingesetzt.

FIG 2 zeigt das Magnetlager 1 mit dem magnetisch leitfähigen Grundkörper 2, der in axialer Richtung durch Teilkörper 9 aufgebaut ist. Diese Teilkörper 9 sind axial voneinander beabstandet, wobei jeweils zwischen axial benachbarten Teilkörpern 9 Abstandshalter vorgesehen sind. Die Abstandshalter können dabei einstückige Scheiben 6 sein, die radiale und/oder axial verlaufende Kühlkanäle 7 aufweisen.

Ebenso können diese Abstandshalter einzeln auf einen Teilkörper 9 aufgebrachte Stege 10 sein, die sich radial erstrecken. Es stellen sich dabei ebenso radiale und/oder axial verlaufende Kühlkanäle 7 im Grundkörper 2 ein.

Jeder Teilkörper 9 weist eine vorgebbare Anzahl von einzelnen Blechen auf, so dass nach einer vorgegebenen Anzahl von Blechen, die einen Teilkörper 9 bilden, ein derartiger Abstandshalter als Anordnung von Stegen 10 oder einer oder mehrerer Scheiben 6 vorgesehen werden kann.

Die axiale Dicke d der Teilkörper 9 und/oder die axiale Breite des Abstandes w zwischen den benachbarten Teilkörper 9 kann über die gesamte axiale Länge des Grundkörpers 2 variieren. Durch diese Möglichkeiten im Aufbau des Grundkörpers 2 kann eine Vergleichmäßigung der Temperaturverteilung im Magnetlager 1, insbesondere im Grundkörper 2 herbeigeführt werden.

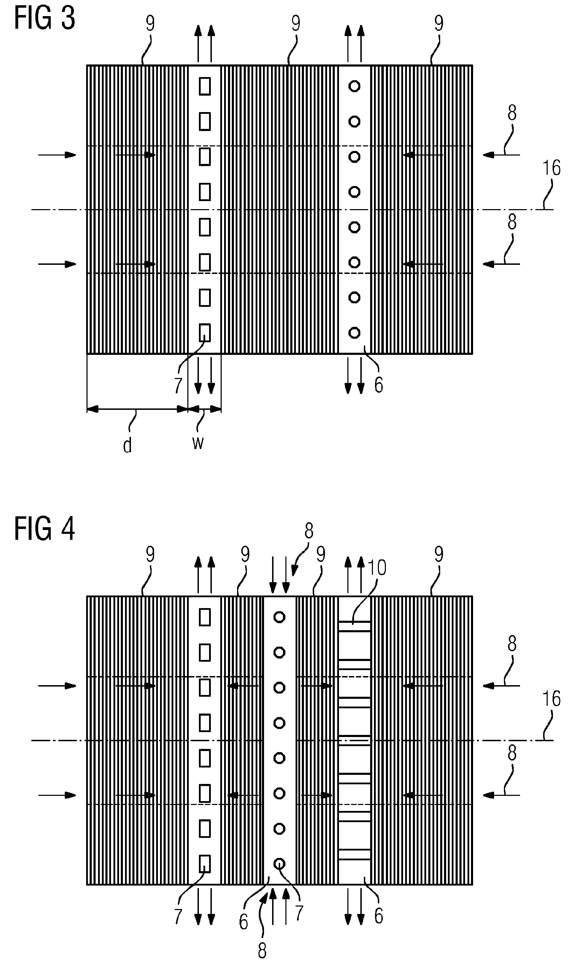

Der magnetisch leitfähige Grundkörper 2 gemäß FIG 3, weist drei Teilkörpern 9 auf, der jeweils zwischen zwei axial benachbarten Teilkörpern 9 eine Scheibe 6 als Abstandshalter aufweist, mit unterschiedlichen beispielhaft dargestellten Kühlöffnungen bzw. Kühlquerschnitten.

FIG 4 zeigt des Weiteren einen magnetischen Grundkörper 2, der vier Teilkörper 9 aufweist, wobei ein Kühlluftstrom 8 radial über die mittige Scheibe 6 und axial an den jeweiligen Stirnseiten in den magnetischen Grundkörper 2 gelenkt wird. Der Austritt der erwärmten Kühlluft 8 erfolgt in den beiden axial äußeren Abstandshaltern, die als Scheibe 6 oder durch Stege 10 gebildet werden.

Ein- und Austrittspunkte der Kühlluftströme können aber der jeweiligen Konstruktionsart des aktiven Magnetlagers 1 angepasst werden.

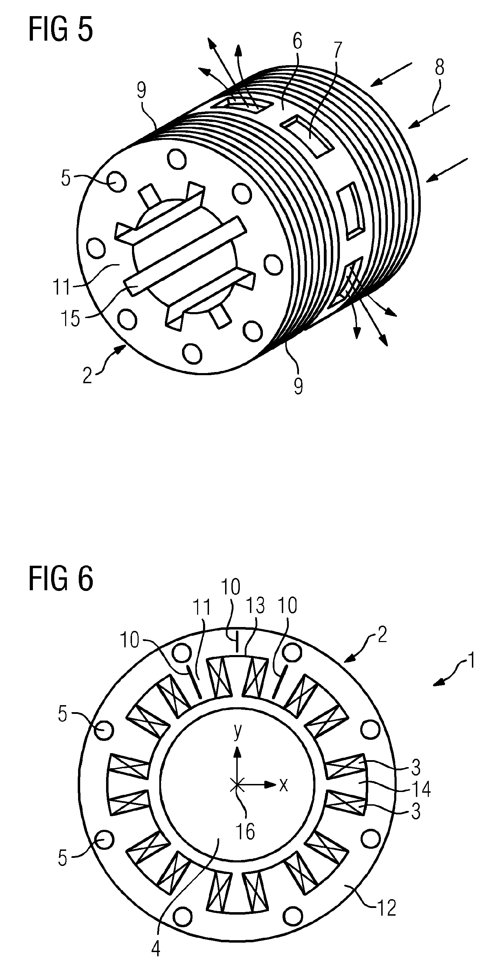

FIG 5 zeigt in teilperspektivischer Darstellung das Magnetlager 1 mit dem magnetisch leitfähigen Grundkörper 2, der in axialer Richtung durch Teilkörper 9 aufgebaut ist. Diese Teilkörper 9 sind axial voneinander beabstandet, wobei jeweils zwischen axial benachbarten Teilkörpern 9 Abstandshalter vorgesehen sind. Die Abstandshalter können dabei einstückige Scheiben 6 sein, die radiale und/oder axial verlaufende Kühlkanäle 7 aufweisen.

Ebenso können diese Abstandshalter einzeln auf einen Teilkörper 9 aufgebrachte in dieser Darstellung nicht näher dargestellte Stege 10 sein, die sich radial erstrecken. Es stellen sich dabei ebenso radiale und/oder axial verlaufende Kühlkanäle 7 im Grundkörper 2 ein.

Jeder Teilkörper 9 ist geblecht aufgebaut, so dass nach einer vorgegebenen Anzahl von Blechen, die einen Teilkörper 9 bilden, ein derartiger Abstandshalter als Anordnung von Stegen 10 oder einer oder mehrerer Scheiben 6 vorgesehen werden kann.

Die axiale Dicke d der Teilkörper 9 und/oder die axiale Breite des Abstandes w zwischen den benachbarten Teilkörper 9 kann über die gesamte axiale Länge des Grundkörpers 2 variieren. Durch diese Möglichkeiten im Aufbau des Grundkörpers 2 kann eine Vergleichmäßigung der Temperaturverteilung im Magnetlager 1, insbesondere im Grundkörper 2 herbeigeführt werden.

In den nunmehr vorhandenen axialen Kühlkanälen 5, 14 als auch radialen Kühlkanälen 7 in den Abstandshaltern 6, 10 zwischen dem Teilkörper 9, kann nunmehr eine Kühlluftströmung 8 geführt werden, die grundsätzlich entweder von der einen Seite in den magnetisch leitfähigen Grundkörper 2 einströmt und zu den Abstandshaltern und dabei vorgesehenen radialen Kühlkanälen 7 ausströmt, als auch eine Strömung, die zunächst über die radialen Kühlkanäle 7 der Abstandshalter in den magnetisch leitfähigen Grundkörper 2 eindringt und sich dort axial in die vorhandenen Kühlkanäle 5, 14 verteilt.

Die axial vorhandenen Kühlkanäle 5, 14 können somit im magnetisch leitfähigen Grundkörper 2 vorhandene axial verlaufende Ausnehmungen sein. Ebenso können die axialen Kühlkanäle 5, 14 sich in den Zwischenräumen der Nuten 15 befinden, die durch die Wicklung 3 nicht beansprucht werden.

Durch die erfindungsgemäße Kühlung des aktiven Magnetlagers 1 ist nunmehr eine kompaktere Bauweise eines derartigen Magnetlagers 1 auch bei großen Anwendungen in beengteren Platzverhältnissen möglich.

FIG 6 zeigt verschiedene Anordnungen und Längen von Stegen 10, die sich zwischen den Teilkörpern 9 befinden. In einem Querschnitt des Grundkörpers 2 erstrecken sich Stege 10 als Abstandshalter, über eine gewisse Zahnhöhe, also den radialen Verlauf eines Zahnes 11. Ebenso können die Stege 10 am Jochrücken 12 angeordnet sein, und sich vom Nutgrund 13 bis maximal zum radial äußeren Rand des magnetischen Grundkörpers 2 erstrecken. Ebenso sind Stege 10 vorstellbar, die sich von der Statorbohrung bis zum radial äußeren Rand des magnetischen Grundkörpers 2 erstrecken. Derartige Stege 10 sind auch in der FIG 4 rechts als Abstandshalter dargestellt.

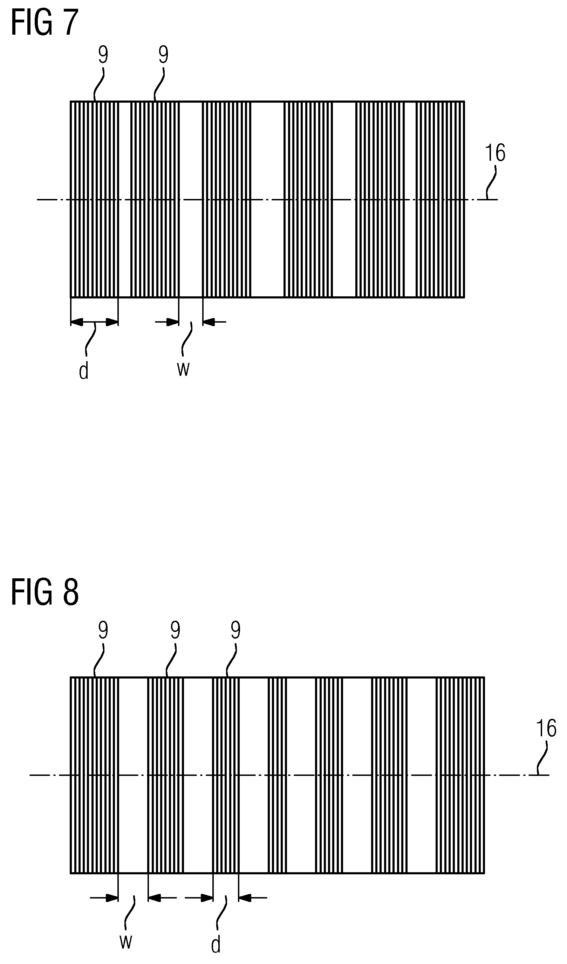

FIG 7 zeigt einen magnetischen Grundkörper 2, der mehrere Teilkörper 9 gleicher axialer Breite d aufweist. Die axialen Abstände w zwischen den Teilkörpern 9 können unterschiedlich sein und werden insbesondere zur Mitte des Grundkörpers 2 hin immer größer. Damit werden auch die innerhalb des Grundkörpers 2 befindlichen Wicklungsanteile und Teilkörper 9 ausreichend gekühlt. Den größten axialen Abstand weisen dabei die mittigen Teilkörper 9 auf.

FIG 8 zeigt einen magnetischen Grundkörper 2, der mehrere Teilkörper 9 unterschiedlicher axialer Breite d aufweist, wobei die axialen Abstände w der benachbarten Teilkörper 9 gleich sind. Die axialen Breiten d der Teilkörper 9 können unterschiedlich sein und werden insbesondere zur Mitte des Grundkörpers 2 immer geringer. Die geringste axiale Breite d weisen dabei die oder der Teilkörper 9 in der Mitte des Grundkörpers 2 auf. Damit werden auch die innerhalb des Grundkörpers 2 befindlichen Wicklungsanteile und Teilkörper 9 ausreichend gekühlt.

Die Kühlung des aktiven Magnetlagers 1 mit einer um die Achse 16 rotierbaren Welle 4 und einem stationär angeordnet magnetisch leitfähigen Grundkörper 2, der die Welle 4 umfasst, wobei die axial hintereinander angeordnete Teilkörper 9, die den magnetisch leitfähigen Grundkörper 2 bilden, wobei in Nuten 15 des magnetisch leitfähigen Grundkörpers 2 ein oder mehrere Wicklungen 3 angeordnet sind und Abstandshalter 6, 10 zwischen den benachbarten Teilkörpern 9 vorgesehen sind erfolgt grundsätzlich durch einen eigen - oder fremderzeugten Kühlluftstrom. Dieser Kühlluftstrom 8 wird durch dementsprechend ausgestaltete Lüfter wird Radial- und/oder Axiallüfter bereitgestellt.

Eine von mehreren Möglichkeiten der Kühlung geschieht durch eine im Wesentlichen axial auf den magnetisch leitfähigen Grundkörper 2 zuströmende Kühlluft 8, die über axial verlaufende Kühlkanäle 5 im magnetisch leitfähigen Grundkörper 2 oder in den Zwischenräumen zwischen den Wicklungen 3 befindlichen Zwischenräumen axial strömt, um am axial nächsten Abstandshalter, der sich zwischen zwei axial voneinander beabstandeten Teilkörpern 9 befindet, zumindest zum Teil radial auszuströmen. Als Abstandshalter ist dabei eine Scheibe 6 oder einer durch Stege 10 gebildeter Abstandshalter vorgesehen. Der im Grundkörper 2 verbleibende Kühlluftstrom wird axial weitergeleitet um entweder axial aus dem Grundkörper 2 auszuströmen oder beim nächsten Abstandshalter zumindest wieder zum Teil radial aus dem Grundkörper 2 auszuströmen.

Die Kühlluftströme 8 sind in den FIG 2 bis 5 beispielhaft dargestellt, sie können durch dementsprechende Maßnahmen, wie z.B. andere Drehrichtung der oben erwähnten Lüfter auch umgekehrt werden.

Ebenso sind auch andere Kühlluftstromverteilungen denkbar, entscheidend ist dabei jeweils ein nahezu konstantes Temperaturniveau vor allem im magnetischen Grundkörper 2 zu erhalten.

Die aktiven Magnetlager 1 und die Verfahren zur Kühlung eines derartigen aktiven Magnetlagers 1 werden beispielsweise bei Verdichtern, Pumpen, Zentrifugen und Fördersystemen in der Lebensmittel-, Chemie- und Pharmaindustrie verwendet. Vor allem bei einer kompakten oder gekapselten Bauweise der aktiven Magnetlager 1 ist eine ausreichende Kühlung unabdingbar.

## Patentansprüche

1. Aktives Magnetlager (1) einer um eine Achse rotierbaren Welle (4) mit,
- einem stationär angeordnet magnetisch leitfähigen Grundkörper (2), der die Welle (4) umfasst,
- axial hintereinander angeordneten Teilkörpern (9), die den magnetisch leitfähigen Grundkörper (2) bilden,
- einem in Nuten des magnetisch leitfähigen Grundkörpers (2) angeordneten Wicklungssystem,
- axialem Abstand (w) zwischen den benachbarten Teilkörpern (9).

2. Aktives Magnetlager (1) nach Anspruch 1, **dadurch gekennzeichnet , dass** zwischen den axial voneinander beabstandeten Teilkörpern (9) Abstandshalter vorgesehen sind.

3. Aktives Magnetlager (1) nach Anspruch 2, **dadurch gekennzeichnet, dass** die Abstandshalter als einzelne Stege (10) zwischen den axial beabstandeten Teilkörpern (9) ausgeführt sind.

4. Aktives Magnetlager (1) nach Anspruch 2, **dadurch gekennzeichnet , dass** die Abstandshalter zwischen den axial voneinander beabstandeten Teilkörpern (9) einteilig als Scheibe (6) ausgeführt sind.

5. Aktives Magnetlager (1) nach einem der vorhergehenden Ansprüche, **dadurch gekennzeichnet , dass** zumindest ein Teilkörper (9) axial verlaufende Kühlkanäle (5) aufweist, die in die Zwischenräume zwischen den axial beabstandeten Teilkörpern (9) münden.

6. Verfahren zur Kühlung eines aktiven Magnetlagers (1) einer um eine Achse (16) rotierbaren Welle mit,
- einem stationär angeordnet magnetisch leitfähigen Grundkörper (2), der die Welle umfasst,
- axial hintereinander angeordneten Teilkörpern (9), die den magnetisch leitfähigen Grundkörper (2) bilden,
- einem in Nuten des magnetisch leitfähigen Grundkörpers angeordneten Wicklungssystem,
- axialem Abstand zwischen den benachbarten Teilkörpern (9), **gekennzeichnet durch** eine im Wesentlichen axial auf den magnetisch leitfähigen Grundkörper (2) zuströmende Kühlluft, die über axial verlaufende Kühlkanäle (5,14) im magnetisch leitfähigen Grundkörper (2) und/oder in den Zwischenräumen zwischen den Wicklungen befindlichen Spalten axial strömt, um am axial nächsten Abstandshalter (6,10), der sich zwischen zwei axial voneinander beabstandeten Teilkörpern (9) befindet, zumindest zum Teil radial auszuströmen.
